# EUROPÄISCHE PATENTSCHRIFT

(11) **EP 2 622 938 B1**
(45) Veröffentlichungstag und Bekanntmachung des Hinweises auf die Patenterteilung: **09.11.2016**
(21) Anmeldenummer: 11758425.0
(22) Anmeldetag: 26.08.2011
(51) Int. Cl.: H05B 3/84

(54) **TRANSPARENTE SCHEIBE MIT HEIZBESCHICHTUNG**
TRANSPARENT PANEL HAVING A HEATABLE COATING
VITRE TRANSPARENTE MUNIE D'UN REVÊTEMENT CHAUFFANT

(30) Priorität: 11.06.2011 EP 11169654; 09.09.2010 EP 10175987
(43) Veröffentlichungstag der Anmeldung: 07.08.2013
(73) Patentinhaber: Saint-Gobain Glass France, 92400 Courbevoie (FR)
(72) Erfinder: LISINSKI, Susanne, 50739 Köln (DE); PHAN, Dang Cuong, 52062 Aachen (DE); SCHALL, Günther, 52372 Kreuzau (DE)
(74) Vertreter: Gebauer, Dieter Edmund
(86) Internationale Anmeldenummer: PCT/EP2011/064708
(87) Internationale Veröffentlichungsnummer: WO 2012/031908

(56) Entgegenhaltungen:
- EP-A1- 2 334 141
- WO-A1-2011/006743
- WO-A2-2007/083038
- DE-A1-102007 008 833
- DE-A1-102009 025 888
- GB-A- 2 381 179
- US-A1- 2006 186 105

## Beschreibung

Die Erfindung betrifft nach ihrer Gattung eine transparente Scheibe mit einer elektrisch heizbaren Beschichtung nach dem Oberbegriff von Patentanspruch 1.

Transparente Scheiben mit einer elektrischen Heizschicht sind als solche wohlbekannt und bereits vielfach in der Patentliteratur beschrieben worden. Lediglich beispielhaft sei in diesem Zusammenhang auf die deutschen Offenlegungsschriften DE 102008018147 A1 und DE 102008029986 A1 verwiesen. In Kraftfahrzeugen werden sie häufig als Windschutzscheiben eingesetzt, da das zentrale Sichtfeld aufgrund gesetzlicher Vorgaben, mit Ausnahme von Heizdrähten, keinerlei Sichteinschränkungen aufweisen darf. Durch die von der Heizschicht erzeugte Wärme können binnen kurzer Zeit kondensierte Feuchtigkeit, Eis und Schnee entfernt werden. Meist werden solche Scheiben als Verbundscheiben hergestellt, in denen zwei Einzelscheiben durch eine thermoplastische Klebeschicht miteinander verbunden sind. Die Heizschicht kann auf eine der inneren Oberflächen der Einzelscheiben aufgebracht sein, wobei aber auch Aufbauten bekannt sind, bei denen sie sich auf einem Träger befindet, der zwischen den beiden Einzelscheiben angeordnet ist.

Die Heizschicht ist in der Regel mit mindestens einem Paar streifen- bzw. bandförmiger Sammelelektroden ("Busbars") elektrisch verbunden, welche den Heizstrom möglichst gleichmäßig in die Beschichtung einleiten und auf breiter Front verteilen sollen. Für eine ansprechende ästhetische Erscheinung der Scheibe werden die undurchsichtigen Sammelelektroden durch opake Maskierungsstreifen verdeckt.

Allgemein kann die spezifische Heizleistung P_{spec} einer heizbaren Beschichtung durch die Formel P_{spec} = U²/(R_{□}·D²) beschrieben werden, worin U die Speisespannung, R_{□} den elektrischen Flächenwiderstand der Beschichtung und D den Abstand zwischen den beiden Sammelelektroden darstellen. Der Flächenwiderstand R_{□} der Beschichtung liegt bei den zurzeit in der industriellen Serienfertigung eingesetzten Materialien in der Größenordnung von einigen Ohm pro Flächeneinheit (Ω/□).

Um mit der in Kraftfahrzeugen standardmäßig zur Verfügung stehenden Bordspannung von 12 bis 24 Volt eine für den gewünschten Zweck zufrieden stellende Heizleistung zu erzielen, sollten die Sammelelektroden einen möglichst geringen Abstand D voneinander haben. In Anbetracht der Tatsache, dass der Widerstand R der heizbaren Beschichtung mit der Länge des Strompfads zunimmt und da die Fahrzeugscheiben in der Regel breiter als hoch sind, sind die Sammelelektroden normalerweise entlang des oberen und unteren Scheibenrands angeordnet, so dass der Heizstrom über den kürzeren Weg der Scheibenhöhe fließen kann.

Nun schirmen Scheiben mit einer elektrischen Heizschicht elektromagnetische Strahlung relativ stark ab, so dass insbesondere in Kraftfahrzeugen mit einer heizbaren Windschutzscheibe der Funkdatenverkehr erheblich beeinträchtigt sein kann. Heizbare Windschutzscheiben werden deshalb häufig mit beschichtungsfreien Zonen ("Kommunikations- oder Sensorfenster") versehen, welche zumindest für bestimmte Bereiche des elektromagnetischen Spektrums gut durchlässig sind, um auf diese Weise einen reibungslosen Datenverkehr zu ermöglichen. Die beschichtungsfreien Zonen, an denen sich häufig elektronische Einrichtungen, wie Sensoren und dergleichen befinden, sind gewöhnlich in der Nähe des oberen Scheibenrands angeordnet, wo sie vom oberen Maskierungsstreifen gut verdeckt werden können.

Jedoch beeinträchtigen beschichtungsfreie Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, bei der die Heizleistung unterhalb und in der Umgebung der beschichtungsfreien Zonen deutlich verringert ist. Andererseits treten Stellen mit einer besonders hohen Stromdichte auf ("Hot Spots"), in denen die Heizleistung stark erhöht ist. In der Folge können sehr hohe lokale Scheibentemperaturen auftreten, welche eine Gefahr für Verbrennungen darstellen und den Scheiben große thermische Spannungen auferlegen. Zudem können sich dadurch Klebstellen von Anbauteilen lösen.

Die nachveröffentlichte europäische Patentanmeldung EP 2334141 A1 zeigt eine beschichtete Scheibe mit einem Kommunikationsfenster, bei der durch Heizleiter im Kommunikationsfenster Strom in das durch die Beschichtung gebildete Heizfeld eingeleitet wird.

Die US-Patentanmeldung US 2006/0186105 A1 zeigt eine heizbare Windschutzscheibe, bei der die obere Busbar in einem mittleren Bereich zwei Segmente aufweist, wobei ein oberes Segmente eine beschichtungsfreie Zone durchquert und ein unteres Segment um die beschichtungsfreie Zone herum geführt ist.

Die britische Patentanmeldung GB 2381179 A zeigt eine Windschutzscheibe mit einem Transmissionsfenster, bei der eine obere Busbar um das Transmissionfenster herum geführt ist.

Der deutschen Offenlegungsschrift DE 102007008833 A1 und der internationalen Patentanmeldung WO 2007/083038 A2 kann jeweils die Verwendung einer Mehrzahl von Anschlussabschnitten zum Einleiten des Heizstroms in die Heizschicht entnommen werden.

Demgegenüber besteht die Aufgabe der vorliegenden Erfindung darin, gattungsgemäße Scheiben so weiterzubilden, dass die Scheibe mit einer zumindest annähernd gleichmäßigen Heizleistungsverteilung beheizbar ist. Die Erzeugung von Hot Spots soll zuverlässig und sicher vermieden werden. Diese und weitere Aufgaben werden nach dem Vorschlag der Erfindung durch eine transparente Scheibe mit den Merkmalen des unabhängigen Patentanspruchs gelöst. Vorteilhafte Ausgestaltungen der Erfindung sind durch die Merkmale der Unteransprüche angegeben.

Gattungsgemäß umfasst die transparente Scheibe eine elektrisch heizbare (leitfähige), transparente Beschichtung, die sich zumindest über einen wesentlichen Teil der Scheibenfläche, insbesondere über deren Sichtfeld, erstreckt. Die elektrisch heizbare Beschichtung ist mit mindestens zwei zum elektrischen Verbinden mit den beiden Polen einer Spannungsquelle vorgesehenen ersten Elektroden elektrisch so verbunden, dass durch Anlegen einer Speisespannung ein Heizstrom über ein zwischen den beiden ersten Elektroden geformtes Heizfeld fließt. Typischer Weise sind die beiden ersten Elektroden jeweils in Form einer streifen- bzw. bandförmigen Elektrode (Sammelelektrode oder Sammelschiene bzw. Busbar) zum Einleiten und breiten Verteilen des Stroms in der heizbaren Beschichtung ausgebildet. Beispielsweise sind die ersten Elektroden zu diesem Zweck mit der Heizschicht galvanisch verbunden. Der Begriff "Heizfeld" bezeichnet hier somit den heizbaren Teil der elektrisch heizbaren Beschichtung, welcher sich zwischen den beiden ersten Elektroden befindet, so dass ein Heizstrom eingeleitet werden kann.

In der erfindungsgemäßen Scheibe enthält das Heizfeld zumindest eine beschichtungsfreie Zone, in der keine Heizschicht vorhanden ist. Die beschichtungsfreie Zone wird von einem zumindest abschnittsweise von der heizbaren Beschichtung gebildeten Zonenrand begrenzt. Insbesondere verfügt die beschichtungsfreie Zone über einen umlaufenden Zonenrand, welcher (vollständig) von der heizbaren Beschichtung gebildet wird. Die beschichtungsfreie Zone kann beispielsweise durch Maskierung beim Aufbringen der Heizschicht auf ein Substrat oder durch Entfernen der Heizschicht beispielsweise durch mechanischen oder chemischen Abtrag nach Aufbringen der elektrisch heizbaren Beschichtung hergestellt werden.

Nach dem Vorschlag der Erfindung zeichnet sich die transparente Scheibe in wesentlicher Weise dadurch aus, dass sie zumindest eine zum elektrischen Verbinden mit dem einen Pol der Spannungsquelle vorgesehene zweite Elektrode aufweist, die zumindest abschnittsweise, insbesondere nur mit einem Elektrodenabschnitt, in der beschichtungsfreien Zone angeordnet und mit der elektrisch heizbaren Beschichtung elektrisch so verbunden ist, dass bei Anlegen einer Speisespannung ein Teil des Heizstroms über einen Bereich bzw. Abschnitt des Heizfelds fließt, der sich zwischen der zweiten Elektrode bzw. der beschichtungsfreien Zone und der zur Verbindung mit dem anderen Pol der Spannungsquelle vorgesehenen ersten Elektrode befindet.

Hierbei verfügt die zweite Elektrode über wenigstens einen zumindest abschnittsweise innerhalb der beschichtungsfreien Zone angeordneten Zuleitungsabschnitt und einen oder mehrere mit dem Zuleitungsabschnitt verbundene Anschlussabschnitte, wobei sich die Anschlussabschnitte jeweils ausgehend von der beschichtungsfreien Zone zumindest über einen Randabschnitt des Zonenrands hinweg erstrecken. Hierbei wird dieser Randabschnitt von einem Abschnitt des Heizfelds gebildet, der sich zwischen der beschichtungsfreien Zone und der zur Verbindung mit dem anderen Pol der Spannungsquelle vorgesehenen ersten Elektrode befindet. Somit befinden sich die beschichtungsfreie Zone und die zur Verbindung mit dem anderen Pol der Spannungsquelle vorgesehene erste Elektrode auf einander gegenüberliegenden Seiten des besagten Abschnitts des Heizfelds. Typischer Weise befindet sich der Randabschnitt des Zonenrands, über den sich die Anschlussabschnitte hinweg erstrecken, in Gegenüberstellung bzw. unmittelbarer Nachbarschaft zu der zur Verbindung mit dem anderen Pol der Spannungsquelle vorgesehenen ersten Elektrode. Beispielsweise weist der besagte Randabschnitt des Zonenrands einen zumindest annähernd geradlinigen Verlauf auf, welcher parallel zu einem zumindest annähernd geradlinigen Abschnitt der zur Verbindung mit dem anderen Pol der Spannungsquelle vorgesehenen ersten Elektrode verläuft. Bei einer beispielsweise zumindest annähernd rechteckigen beschichtungsfreien Zone, deren Ränder parallel bzw. senkrecht zu geradlinigen ersten Elektroden angeordnet sind, wird der Heizstrom zu diesem Zweck über den der ersten Elektrode gegenüberliegenden Randabschnitt in die heizbare Beschichtung eingeleitet. Dieser Randabschnitt hat einen kürzesten Abstand zu der zur Verbindung mit dem anderen Pol der Spannungsquelle vorgesehenen ersten Elektrode.

Allgemein ist die zweite Elektrode so ausgebildet, dass der Heizstrom in die heizbare Beschichtung (breit) verteilt eingeleitet werden kann. Die zweite Elektrode verfügt zu diesem Zweck über einen oder bevorzugt mehrere Anschlussabschnitte, welche sich über den die beschichtungsfreie Zone begrenzenden Rand der heizbaren Beschichtung hinweg erstrecken und mit der elektrisch heizbaren Beschichtung elektrisch verbunden sind, um den Heizstrom (breit) verteilt in die Beschichtung einzuleiten. Die Anschlussabschnitte sind zu diesem Zweck vorteilhaft frei endend ausgebildet, insbesondere in Form von Vorsprüngen, welche vorzugsweise zu der zur elektrischen Verbindung mit dem anderen Pol der Spannungsquelle vorgesehenen ersten Elektrode hin vorspringen. Vorteilhaft sind die Anschlussabschnitte gleichmäßig verteilt über den besagten Randabschnitt angeordnet, vorzugsweise mit einem gleichen Zwischenabstand nebeneinander liegend. Die Anschlussabschnitte können beispielsweise wie die Zinken eines Kamms bzw. kammartig angeordnet sein. Durch diese Maßnahme kann ein besonders gleichmäßiges Einleiten des Heizstroms in die heizbare Beschichtung erreicht werden. Die Anschlussabschnitte können insbesondere senkrecht zum Randabschnitt, über den hinweg sie sich erstrecken, angeordnet sein.

In vorteilhafter Weise kann in der erfindungsgemäßen Scheibe eine Potenzialdifferenz zwischen der zumindest abschnittsweise in der beschichtungsfreien Zone angeordneten zweiten Elektrode und der zur Verbindung mit dem anderen Pol der Spannungsquelle vorgesehenen ersten Elektrode so eingestellt werden, dass die Stromdichteverteilung des Heizstroms in der heizbaren Beschichtung zumindest annähernd homogen ist. In entsprechender Weise kann eine Homogenisierung der Heizleistungsverteilung in der heizbaren Beschichtung erreicht werden, wobei insbesondere Stellen mit verringerter oder erhöhter Heizleistung (Hot Spots) vermieden werden können.

Durch die zumindest abschnittsweise in der beschichtungsfreien Zone angeordnete zweite Elektrode kann die Wärmeverteilung in der Heizschicht gezielt beeinflusst werden. Ein besonderer Vorteil ergibt sich daraus, dass die zweite Elektrode zumindest mit einem Elektrodenabschnitt innerhalb der beschichtungsfreien Zone angeordnet ist, so dass dort kein von den beiden ersten Elektroden eingespeister Heizstrom von der Heizschicht in die zweite Elektrode fließen kann. Somit kann eine unerwünschte zusätzliche (z.B. lokale) Erwärmung der zweiten Elektrode mit der Gefahr der Bildung von Hot Spots vermieden werden. Andererseits ist ein solcher Effekt typischer Weise zu erwarten, wenn die zweite Elektrode beispielsweise um die beschichtungsfreie Zone herum auf die Heizschicht aufgebracht wird.

Ein weiterer Vorteil der zumindest abschnittsweise in der beschichtungsfreien Zone angeordneten zweiten Elektrode ergibt sich aus der Tatsache, dass die Haftung einer beispielsweise metallischen Druckpaste auf einem beispielsweise gläsernen Substrat typischer Weise besser ist als auf der heizbaren Beschichtung. Dies gilt insbesondere für eine im Druckverfahren aufgebrachte Silberdruckpaste, mit der eine besonders gute Adhäsion auf Glas erreicht werden kann. Hierdurch kann die Haltbarkeit, insbesondere die Kratzempfindlichkeit, der zweiten Elektrode erheblich verbessert werden.

Ein weiterer Vorteil der zumindest abschnittsweise in der beschichtungsfreien Zone angeordneten zweiten Elektrode ergibt sich durch die Heizwirkung der zweiten Elektrode innerhalb der beschichtungsfreien Zone. Bei entsprechender Auslegung der zweiten Elektrode kann ein etwaiger Rückstand an Eis oder kondensiertem Wasser im Bereich der beschichtungsfreien Zone durch die von der zweiten Elektrode abgegebenen Wärme vermieden werden.

Wie bereits angegeben, ist die zweite Elektrode zur Verbindung mit dem einen Pol der Spannungsquelle vorgesehen, wobei es in dieser Hinsicht von Vorteil ist, wenn die zweite Elektrode mit der zur Verbindung mit dem einen Pol der Spannungsquelle vorgesehen ersten Elektrode elektrisch verbunden ist, so dass die zweite Elektrode keinen separaten elektrischen Anschluss zur Spannungsquelle benötigt. Alternativ wäre es jedoch auch möglich, dass die zweite Elektrode einen separaten Anschluss zur Spannungsquelle hat. In besonders vorteilhafter Weise sind die zweite Elektrode und die zur Verbindung mit dem einen Pol der Spannungsquelle vorgesehene erste Elektrode zu diesem Zweck in Form einer (einzelnen) gemeinsamen Elektrode ausgebildet, so dass die zweite Elektrode durch einen Elektrodenabschnitt der ersten Elektrode gebildet ist. Durch diese Maßnahmen kann die erfindungsgemäße Scheibe in technisch besonders einfacher Weise hergestellt werden, insbesondere durch einen gemeinsamen bzw. selben Verfahrenschritt.

Erfindungsgemäß besteht der mit den Anschlussabschnitten verbundene Zuleitungsabschnitt aus zumindest zwei (strukturell) voneinander getrennten, aber elektrisch miteinander verbundenen Zuleitungsteilen. Insofern ist die zweite Elektrode an den beiden Zuleitungsteilen des Zuleitungsabschnitts unterbrochen, d.h. die beiden Zuleitungsteile haben keinen Berührungskontakt miteinander.

Wesentlich hierbei ist, dass die beiden Zuleitungsteile jeweils einen Kopplungsabschnitt aufweisen, der mit der heizbaren Beschichtung elektrisch verbunden ist, beispielsweise durch Drucken auf die heizbare Beschichtung. Weiterhin sind die beiden Kopplungsabschnitte so angeordnet, dass sie durch die heizbare Beschichtung galvanisch miteinander gekoppelt sind. Als Kopplungsabschnitte werden hier und im Weiteren jene Bereiche der beiden Zuleitungsteile des Zuleitungsabschnitts bezeichnet, welche einerseits mit der heizbaren Beschichtung elektrisch verbunden und andererseits galvanisch miteinander gekoppelt sind. Dies schließt jedoch nicht aus, dass die Zuleitungsteile jeweils auch andere Abschnitte aufweisen können, die zwar mit der heizbaren Beschichtung elektrisch verbunden, jedoch nicht mit dem anderen Zuleitungsteil galvanisch gekoppelt sind.

Die zweite Elektrode hat somit keine zusammenhängende Struktur, sondern wird durch die beiden voneinander getrennten Zuleitungsteile des Zuleitungsabschnitts, die elektrisch heizbare Beschichtung zwischen den beiden Kopplungsabschnitten sowie dem einen oder mehreren Anschlussabschnitten gebildet.

Die beiden Kopplungsabschnitte der Zuleitungsteile sind zum Zwecke einer galvanischen Kopplung (unmittelbar) benachbart bzw. aneinander angrenzend angeordnet, wobei die beiden Kopplungsabschnitte in Gegenüberstellung angeordnet sind und nebeneinander bzw. gegenüberliegend mit einem gewissen Zwischenabstand verlaufen. Der Abstand zwischen den beiden Kopplungsabschnitten ist vorzugsweise so gewählt, dass der Heizstrom zumindest annähernd ohne Verlust von Ladungsträgern durch die heizbare Beschichtung von dem einen Kopplungsabschnitt zum anderen Kopplungsabschnitt fließen kann. Beispielsweise haben die Kopplungsabschnitte zu diesem Zweck einen Zwischenabstand, der im einstelligen Zentimeterbereich oder darunter liegt.

Zwar ist die elektrische Verlustleistung der Elektroden während des Bestromens mit dem Heizstrom relativ gering, jedoch kann eine Erwärmung des Zuleitungsabschnitts der zweiten Elektrode, insbesondere für den Fall, dass der Zuleitungsabschnitt eine gewundene Form aufweist, nicht ausgeschlossen werden. So können gegebenenfalls lokale heiße Stellen (Hot Spots) im Bereich des Zuleitungsabschnitts auftreten. Durch die hier vorgeschlagene Unterteilung des Zuleitungsabschnitts in zumindest zwei voneinander getrennte Zuleitungsteile kann in besonders vorteilhafter Weise dem Auftreten solcher Hot Spots effektiv entgegen gewirkt werden, da der Heizstrom auf eine vergleichsweise große Fläche verteilt wird.

Wie bereits ausgeführt wurde, sind die beiden Kopplungsabschnitte zueinander benachbart angeordnet, wobei sie insbesondere jeweils einen zumindest annähernd geradlinigen, zueinander parallelen Verlauf haben können, um eine besonders effektive galvanische Kopplung durch die elektrisch leitfähige Beschichtung zu erreichen.

Insbesondere kann einer der beiden Kopplungsabschnitte ("erster Kopplungsabschnitt") mit der zur Verbindung mit dem einen Pol der Spannungsquelle vorgesehenen ersten Elektrode und der andere Kopplungsabschnitt ("zweiter Kopplungsabschnitt") mit dem einen oder mehreren Anschlussabschnitten verbunden. Diese Maßnahme ermöglicht eine technische besonders einfache Realisierung der unterteilten zweiten Elektrode.

Vorzugsweise sind die Elektroden der transparenten Scheibe im Druckverfahren, beispielsweise Siebdruckverfahren, hergestellt, wodurch eine technisch besonders einfache, kostengünstige und zuverlässige Fertigung, insbesondere der beiden getrennten, jedoch galvanisch gekoppelten Zuleitungsteile ermöglicht ist. Alternativ wäre es auch möglich, die beiden ersten Elektroden und/oder die zweite Elektrode jeweils als selbständige elektrische Komponenten zu fertigen und mit der heizbaren Beschichtung beispielsweise durch Löten elektrisch zu verbinden.

Die zweite Elektrode verfügt über wenigstens einen mit den Anschlussabschnitten verbundenen Zuleitungsabschnitt, der sich bei einer Ausgestaltung der Erfindung aus einem (ausschließlich) außerhalb der beschichtungsfreien Zone angeordneten Beschichtungsteil und einem (ausschließlich) innerhalb der beschichtungsfreien Zone angeordneten Zonenteil zusammensetzt. Alternativ kann der Zuleitungsabschnitt ausschließlich aus dem Zonenteil bestehen, so dass der Zuleitungsabschnitt vollständig innerhalb der beschichtungsfreien Zone angeordnet ist. Die letztgenannte Gestaltung hat den besonderen Vorteil, dass die zweite Elektrode praktisch vollständig auf ein beispielsweise gläsernes Substrat aufgebracht werden kann, so dass die zweite Elektrode eine besonders gute Haftung am Substrat hat. Zudem können in besonders vorteilhafter Weise über die heizbare Beschichtung fließende Ströme zwischen benachbarten Abschnitten des Zuleitungsabschnitts vermieden werden.

Der Zuleitungsabschnitt, insbesondere der innerhalb der beschichtungsfreien Zone angeordnete Zonenteil, der zweiten Elektrode folgt vorteilhaft zumindest dem Randabschnitt (bzw. dessen Kontur) des Zonenrands, über welchen sich die Anschlussabschnitte hinweg erstrecken, wodurch ein besonders effektives Einleiten des Heizstroms in den zwischen der beschichtungsfreien Zone und der zur Verbindung mit dem anderen Pol der Spannungsquelle vorgesehenen ersten Elektrode befindlichen Abschnitt des heizbaren Beschichtung erreicht werden kann.

Für die oben genannte Heizwirkung ist es von besonderem Vorteil, wenn der Zuleitungsabschnitt, insbesondere der Zonenteil, dem Zonenrand umlaufend folgt, so dass im Bereich des kompletten Zonenrands Wärme an die beschichtungsfreie Zone abgegeben werden kann. Bei einer in dieser Hinsicht besonders vorteilhaften Ausgestaltung ist der Zuleitungsabschnitt, insbesondere der Zonenteil, über die beschichtungsfreie Zone verteilt angeordnet, beispielsweise indem der umlaufende Zonenteil mit Querverbindungsabschnitten versehen ist, so dass die beschichtungsfreie Zone besonders effektiv durch die zweite Elektrode heizbar ist.

In der erfindungsgemäßen Scheibe kann die zweite Elektrode auch eine Mehrzahl Zuleitungsabschnitte aufweisen, die jeweils über einen innerhalb der beschichtungsfreie Zone angeordneten Zonenteil verfügen, wobei jeder Zonenteil mit einem oder mehreren Anschlussabschnitten verbunden ist. Diese Maßnahme ermöglicht in besonders einfacher Weise, dass der Zuleitungsabschnitt nur in bestimmten Randabschnitten der Kontur der beschichtungsfreien Zone folgt, wobei beispielsweise bestimmte Randabschnitte ausgespart werden, etwa weil diese eine besonders hohe Krümmung aufweisen oder ein sehr geringer Abstand zu der mit dem anderen Pol der Spannungsquelle vorgesehenen ersten Elektrode vorliegt, mit der Folge eines unerwünscht hohen Stroms (ungleiche Heizleistungsverteilung) zwischen der zweiten Elektrode und der ersten Elektrode.

Ebenso kann die transparente Scheibe über eine Mehrzahl beschichtungsfreier Zonen verfügen, denen jeweils eine separate zweite Elektrode zugeordnet sein kann. Alternativ kann der Mehrzahl beschichtungsfreier Zonen eine einzige zweite Elektrode gemeinsam zugeordnet sein, welche dann folglich über mehrere Zonenteile mit jeweils einem oder mehreren Anschlussabschnitten verfügt.

Die elektrisch heizbare Beschichtung kann aus einer elektrisch heizbaren Einzelschicht oder aus einer eine solche Einzelschicht enthaltenden Schichtenfolge bestehen. Allgemein ist in der erfindungsgemäßen Scheibe der elektrische Widerstand der heizbaren Beschichtung so bemessen, dass bei Anlegen einer Speisespannung, die beispielsweise im Bereich von 12 bis 24 Volt liegt, eine für die praktische Anwendung geeignete Heizleistung im Bereich von beispielsweise 300 bis 1000 Watt/m² vom Heizfeld abgegeben wird. Dabei hängt der elektrische Widerstand der heizbaren Beschichtung von dem für die Heizschicht verwendeten Material ab, zu welchem Zweck beispielsweise Silber (Ag) verwendet wird. Beispielsweise liegt der elektrische Widerstand der heizbaren Beschichtung im Bereich von 0,5 bis 4 Ω/□. Die leitfähige Beschichtung enthält ein elektrisch leitfähiges Material, typischer Weise ein Metall oder Metalloxid. Beispiele hierfür sind Metalle mit einer hohen elektrischen Leitfähigkeit wie Silber (Ag), Kupfer (Cu), Gold (Au), Aluminium (Al) oder Molybdän (Mo), Metall-Legierungen wie mit Palladium (Pa) legiertes Silber (Ag), sowie transparente, leitfähige Oxide (TCO = Transparent Conductive Oxides). Bei TCO handelt es sich vorzugsweise um Indiumzinnoxid, fluordotiertes Zinndioxid, aluminiumdotierts Zinndioxid, galliumdotiertes Zinndioxid, bordotiertes Zinndioxid, Zinnzinkoxid oder antimondotiertes Zinnoxid. Beispielsweise besteht die leitfähige Beschichtung aus einer Metallschicht wie eine Silberschicht oder eine silberhaltige Metalllegierung, die zwischen mindestens zwei Beschichtungen aus dielektrischem Material vom Typ Metalloxid eingebettet ist. Das Metalloxid enthält beispielsweise Zinkoxid, Zinnoxid, Indiumoxid, Titanoxid, Siliziumoxid, Aluminiumoxid oder dergleichen sowie Kombinationen von einem oder mehreren hieraus. Das dielektrische Material kann auch Siliziumnitrid, Siliziumcarbid oder Aluminiumnitrid enthalten. Beispielsweise werden Metallschichtsysteme mit mehreren Metallschichten verwendet, wobei die einzelnen Metallschichten durch mindestens eine Schicht aus dielektrischem Material getrennt sind. Auf beiden Seiten einer Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Bei der leitfähigen Beschichtung handelt es sich vorzugsweise um eine transparente Beschichtung, die für elektromagnetische Strahlung, vorzugsweise elektromagnetische Strahlung einer Wellenlänge von 300 bis 1300 nm, insbesondere für sichtbares Licht, durchlässig ist. Der Begriff "durchlässig" bezieht sich hier auf eine Gesamttransmission, die insbesondere für sichtbares Licht beispielsweise >70% und insbesondere >80% ist. Beispielsweise beträgt die Lichttransmission einer Kraftfahrzeug-Windschutzscheibe ca. 71%. Transparente leitfähige Beschichtungen sind beispielsweise aus den Druckschriften DE 202008017611 U1 und EP 0847965 B1 bekannt.

Vorteilhaft ist die Schichtenfolge thermisch hoch belastbar, so dass sie die zum Biegen von Glasscheiben erforderlichen Temperaturen von typischer Weise mehr als 600°C ohne Schädigung übersteht, wobei aber auch thermisch gering belastbare Schichtenfolgen vorgesehen sein können. Ein solcher Schichtenaufbau wird typischer Weise durch eine Folge von Abscheidevorgängen erhalten. Die leitfähige Beschichtung ist beispielsweise aus der Gasphase direkt auf ein Substrat abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die leitfähige Beschichtung durch Sputtern (Magnetron-Kathodenzerstäubung) auf einem Substrat abgeschieden. Denkbar ist jedoch auch, die leitfähige Beschichtung zunächst auf eine Kunststofffolie, insbesondere PET-Folie (PET = Polyethylenterephthalat), aufzubringen, die dann mit einem Substrat verklebt wird.

Die Dicke der leitfähigen Beschichtung kann breit variieren und den Erfordernissen des Einzelfalls angepasst werden. Wesentlich ist hierbei, dass bei einer transparenten flächigen elektrischen Struktur die Dicke der leitfähigen Beschichtung nicht so groß werden darf, dass sie für elektromagnetische Strahlung, vorzugsweise elektromagnetische Strahlung einer Wellenlänge von 300 bis 1300 nm und insbesondere sichtbares Licht, undurchlässig wird. Beispielsweise liegt die Dicke der leitfähigen Beschichtung an jeder Stelle im Bereich von 30 nm bis 100 µm. Im Falle von TCO liegt die Schichtdicke beispielsweise im Bereich von 100 nm bis 1,5 µm, bevorzugt im Bereich von 150 nm bis 1 µm und stärker bevorzugt im Bereich von 200 nm bis 500 nm. Andererseits haben die beiden ersten Elektroden und die zweite Elektrode im Vergleich zur heizbaren Beschichtung jeweils einen wesentlich geringeren elektrischen Widerstand. Beispielsweise haben die Elektroden jeweils einen elektrischen Widerstand, der im Bereich von 0,15 bis 4 Ohm/Meter (Ω/m) liegt, wodurch erreicht werden kann, dass die angelegte Speisespannung im Wesentlichen über der heizbaren Beschichtung abfällt, so dass sich die Elektroden im Betrieb nur wenig aufheizen und ein vergleichsweise geringer Anteil der verfügbaren Heizleistung an den Elektroden als Verlustleistung abgegeben wird. Alternativ kann aber auch eine wesentlich höhere Verlustleistung der zweiten Elektrode vorgesehen sein, um eine zum Heizen der beschichtungsfreien Zone ausreichende Heizleistung durch die zweite Elektrode zu erzielen.

Als Elektrodenmaterial kann beispielsweise ein Metall wie Silber (Ag), insbesondere in Form einer Druckpaste zur Verwendung im Druckverfahren, Kupfer (Cu), Aluminium (Al), Wolfram (W) und Zink (Zn), oder eine Metalllegierung verwendet werden, wobei diese Aufzählung nicht abschließend ist. Beispielsweise enthält die Druckpaste Silber-Partikel und Glasfritten. Für eine beispielsweise aus Silber (Ag) bestehende Elektrode, welche im Druckverfahren hergestellt ist, liegt die Schichtdicke beispielsweise im Bereich von 2 bis 25 Mikrometer (µm), insbesondere im Bereich von 5 bis 15 µm, beispielsweise im Bereich von 7 bis 15 µm.

Insbesondere können die Elektroden durch Aufdrucken einer metallischen Druckpaste auf die leitfähige Beschichtung hergestellt werden. Alternativ ist es auch möglich, dass ein dünner Metallfolienstreifen als Elektrode verwendet wird, welcher beispielsweise Kupfer und/oder Aluminium enthält. Beispielsweise kann durch einen Autoklavprozess durch die Einwirkung von Wärme und Druck ein elektrischer Kontakt zwischen dem Metallfolienstreifen und der leitfähigen Beschichtung erreicht werden. Der elektrische Kontakt kann aber auch durch Auflöten oder Kleben mit einem elektrisch leitfähigen Kleber hergestellt werden.

Generell kann der elektrische Widerstand der zweiten Elektrode entsprechend den spezifischen Anforderungen der jeweiligen Anwendung bemessen sein. Erfindungsgemäß ist es von Vorteil, wenn die zweite Elektrode einen solchen Widerstand hat, dass beim Anlegen der Speisespannung eine Potenzialdifferenz zwischen der zweiten Elektrode und der zur Verbindung mit dem anderen Pol der Spannungsquelle vorgesehenen ersten Elektrode auftritt, durch welche erreicht wird, dass die Stromdichteverteilung des Heizstroms in der heizbaren Beschichtung zumindest annähernd homogen ist. Zu diesem Zweck kann es von Vorteil sein, wenn die zweite Elektrode über einen beispielsweise abschnittsweise außerhalb der beschichtungsfreien Zone befindlichen Zuleitungsabschnitt verfügt, dessen Länge beispielsweise durch einen mäanderartig geschwungenen Verlauf so bemessen ist, dass die zweite Elektrode einen vorbestimmbaren (wählbaren) bzw. vorbestimmten elektrischen Widerstand hat. Da der elektrische Widerstand mit einer Längenzunahme ansteigt, kann der Widerstand der zweiten Elektrode auf diese Weise sehr einfach durch eine Längenvariation des Zuleitungsabschnitts verändert werden. Vorteilhaft im Hinblick auf eine zumindest annähernd homogene Stromdichteverteilung des Heizstroms in der heizbaren Beschichtung kann es sein, wenn insbesondere durch Längenvariation des Zuleitungsabschnitts die zweite Elektrode einen elektrischen Widerstand hat, der dem elektrischen Widerstand entspricht, welche die heizbare Beschichtung in einem Flächenabschnitt hat, welcher zur beschichtungsfreien Zone gleich groß ist. Durch diese Maßnahme kann eine besonders effektive Homogenisierung der Stromdichteverteilung in der Heizschicht erreicht werden.

Wie bereits angegeben, ist es in der erfindungsgemäßen Scheibe im Hinblick auf eine homogene Stromdichteverteilung im Heizfeld von Vorteil, wenn die zweite Elektrode so ausgebildet ist, dass der Heizstrom über den die beschichtungsfreie Zone begrenzenden Rand der heizbaren Beschichtung verteilt eingeleitet wird. Hierbei kann die zweite Elektrode beispielsweise so ausgebildet sein, dass der Heizstrom zumindest über einen solchen Randabschnitt der heizbaren Beschichtung verteilt eingeleitet wird, der einen kürzesten Abstand, insbesondere einen kürzesten senkrechten Abstand, zu der zur Verbindung mit dem anderen Pol der Spannungsquelle vorgesehenen ersten Elektrode hat. Bei einer beispielsweise zumindest annähernd rechteckförmigen beschichtungsfreien Zone kann der Heizstrom zu diesem Zweck beispielsweise über einen der beiden längeren Randabschnitte oder einen der beiden kürzeren Randabschnitte eingeleitet werden, je nachdem welcher Randabschnitt der zur Verbindung mit dem anderen Pol der Spannungsquelle vorgesehenen ersten Elektrode gegenüberliegt.

Die erfindungsgemäße Scheibe kann beispielsweise als so genanntes Einscheibensicherheitsglas (ESG) mit nur einem Substrat oder als Verbundscheibe mit in der Regel zwei durch eine thermoplastische Klebeschicht miteinander verbundenen Substraten ausgebildet sein. Das Substrat besteht beispielsweise aus einem gläsernen Material, wie Floatglas, Quarzglas, Borsilikatglas, Kalk-Natron-Glas, Gussglas oder Keramikglas, oder aus einem nicht-gläsernen Material, beispielsweise Kunststoff, wie Polystyrol (PS), Polyamid (PA), Polyester (PE), Polyvinylchlorid (PVC), Polycarbonat (PC), Polymethylmethacrylat (PMA) oder Polyethylenterephtalat (PET) und/oder Gemische hieraus. Beispiele geeigneter Gläser können beispielsweise dem europäischen Patent EP 0847965 B1 entnommen werden. Allgemein kann jedes Material mit ausreichender chemischer Beständigkeit, geeigneter Form- und Größenstabilität, sowie gegebenenfalls hinreichender optischer Transparenz verwendet werden. Je nach Anwendung kann die Dicke des Substrats breit variieren. Für eine beheizbare, transparente Verglasung liegt die Dicke des Substrats beispielsweise im Bereich von 1 bis 25 mm, wobei für transparente Scheiben typischer Weise eine Dicke von 1,4 bis 2,1 mm verwendet wird. Das Substrat ist planar oder in eine oder mehrere Raumrichtungen gebogen. Bei einer Verbundscheibe ist die heizbare Beschichtung auf zumindest einer Oberfläche beispielsweise auf der zur Außenscheibe hin gewandten Oberfläche der Innenscheibe, und/oder auf einer Oberfläche eines zwischen den beiden Einzelscheiben angeordneten Trägers angeordnet. Beispielsweise ist die erfindungsgemäße Scheibe in Form einer Fahrzeug-Windschutzscheibe ausgeführt, wobei die beschichtungsfreie Zone beispielsweise benachbart bzw. in Nähe zu einem im eingebauten Zustand oberen Scheibenrand der Windschutzscheibe angeordnet ist, wodurch eine einfache Verdeckung der beschichtungsfreien Zone durch ein beispielsweise als schwarzer Siebdruckrand ausgeführtes, opakes Abdeckelement möglich ist.

Die Erfindung erstreckt sich weiterhin auf ein Verfahren zur Herstellung einer wie oben ausgeführten transparenten Scheibe. Das Verfahren umfasst folgende Schritte:
- Herstellen einer elektrisch heizbaren Beschichtung, die sich zumindest über einen wesentlichen Teil der Scheibenfläche, insbesondere über deren Sichtfeld, erstreckt;
- Ausbilden von mindestens zwei zum elektrischen Verbinden mit den beiden Polen einer Spannungsquelle vorgesehenen ersten Elektroden, welche mit der heizbaren Beschichtung elektrisch so verbunden sind, dass durch Anlegen einer Speisespannung ein Heizstrom über ein zwischen den beiden ersten Elektroden befindliches Heizfeld fließt;
- Herstellen zumindest einer beschichtungsfreien Zone im Heizfeld, welche von einem zumindest abschnittsweise von der heizbaren Beschichtung gebildeten Zonenrand begrenzt wird;
- Herstellen zumindest einer zum elektrischen Verbinden mit dem einen Pol der Spannungsquelle vorgesehenen zweiten Elektrode, die zumindest abschnittsweise in der beschichtungsfreien Zone verläuft und mit der heizbaren Beschichtung elektrisch so verbunden ist, dass ein Teil des Heizstroms über einen Abschnitt des Heizfelds fließt, der sich zwischen der zweiten Elektrode und der zur Verbindung mit dem anderen Pol der Spannungsquelle vorgesehenen ersten Elektrode befindet. Hierbei wird die zweite Elektrode so hergestellt, dass sie über wenigstens einen zumindest abschnittsweise innerhalb der beschichtungsfreien Zone angeordneten Zuleitungsabschnitt und einen oder mehrere Anschlussabschnitte verfügt, wobei sich die Anschlussabschnitte jeweils ausgehend von der beschichtungsfreien Zone über einen Randabschnitt des Zonenrands hinweg erstrecken, wobei der Randabschnitt von einem Abschnitt des Heizfelds gebildet wird, der sich zwischen der beschichtungsfreien Zone und der zur Verbindung mit dem anderen Pol der Spannungsquelle vorgesehenen ersten Elektrode befindet. Typischer Weise wird die zweite Elektrode so ausgebildet, dass sie über einen zumindest abschnittsweise außerhalb der beschichtungsfreien Zone angeordneten Zuleitungsabschnitt und mehrere Anschlussabschnitte verfügt, wobei die Anschlussabschnitte zumindest über einen Randabschnitt des die beschichtungsfreie Zone begrenzenden Rands, welcher der zur Verbindung mit dem anderen Pol der Spannungsquelle vorgesehenen ersten Elektrode gegenüberliegt, verteilt angeordnet und mit der heizbaren Beschichtung elektrisch verbunden werden. Hierbei wird der Zuleitungsabschnitt aus zumindest zwei voneinander getrennten Zuleitungsteilen gebildet, welche jeweils einen mit der heizbaren Beschichtung elektrisch verbundenen Kopplungsabschnitt aufweisen, wobei die beiden Kopplungsabschnitte einander gegenüberliegend so angeordnet werden, dass sie durch die heizbare Beschichtung galvanisch gekoppelt sind.

Bei einer vorteilhaften Ausgestaltung des erfindungsgemäßen Verfahrens werden die Elektroden, insbesondere die zweite Elektrode und die zum elektrischen Verbinden mit dem einen Pol der Spannungsquelle vorgesehene erste Elektrode, beispielsweise durch Drucken, insbesondere Siebdrucken, in einem selben Verfahrens- bzw. Druckschritt gemeinsam hergestellt.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1: eine Draufsicht einer beispielhaften Ausgestaltung einer erfindungsgemäßen Kraftfahrzeug-Windschutzscheibe;
- Fig. 2: eine perspektivische Schnittdarstellung eines Ausschnitts der Windschutzscheibe von Fig. 1;
- Fig. 2A-2B: eine weitere Variante der Windschutzscheibe von Fig. 1 mit einem unterbrochenen Zuleitungsabschnitt;
- Fig. 3-4: Varianten der Windschutzscheibe von Fig. 2A und 2B;
- Fig. 5: eine weitere Windschutzscheibe.

### Ausführliche Beschreibung der Zeichnungen

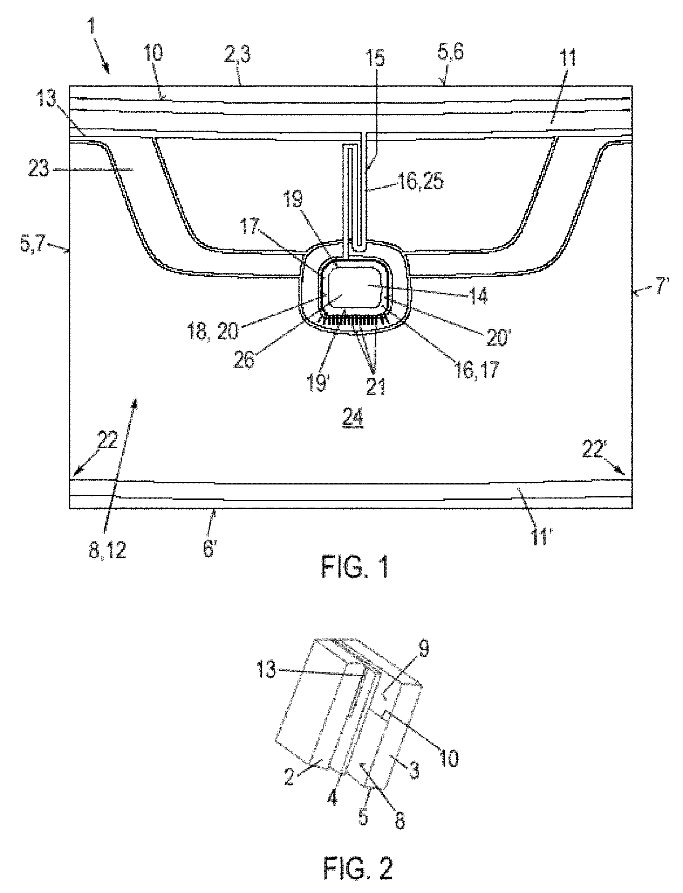

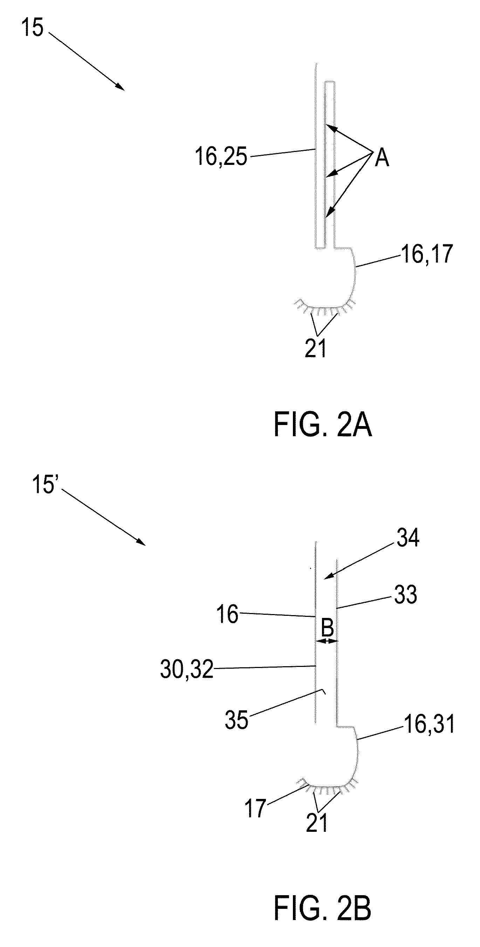

Seien zunächst die Figuren 1 und 2 betrachtet, worin eine insgesamt mit der Bezugszahl 1 bezeichnete transparente Windschutzscheibe eines Kraftfahrzeugs gezeigt ist. Fig. 1 zeigt eine Ansicht der Windschutzscheibe 1 von innen. Die Windschutzscheibe 1 ist hier beispielsweise als Verbundscheibe aufgeführt, deren Aufbau in der perspektivischen Schnittdarstellung von Fig. 2 erkennbar ist.

Demnach umfasst die Windschutzscheibe 1 zwei starre Einzelscheiben, nämlich eine Außenscheibe 2 und eine Innenscheibe 3, die durch eine thermoplastische Klebeschicht 4, hier beispielsweise eine Polyvinylbutyralfolie (PVB), Ethylen-Vinyl-Acetat-Folie (EVA) oder Polyurethanfolie (PU) fest miteinander verbunden sind. Die beiden Einzelscheiben 2, 3 sind in etwa von gleicher Größe und Form und können beispielsweise eine trapezförmig geschwungene Kontur haben, was in den Figuren nicht näher dargestellt ist. Sie sind beispielsweise aus Glas gefertigt, wobei sie gleichermaßen aber auch aus einem nichtgläsernen Material, wie Kunststoff, hergestellt sein können. Für andere Anwendungen wie als Windschutzscheibe wäre es auch möglich, die beiden Einzelscheiben 2, 3 aus einem flexiblen Material herzustellen. Die Kontur der Windschutzscheibe 1 ergibt sich durch einen den beiden Einzelscheiben 2, 3 gemeinsamen Scheibenrand 5, wobei die Windschutzscheibe 1 oben und unten über zwei gegenüberliegende erste Seiten 6, 6' sowie links und rechts über zwei gegenüberliegende zweite Seiten 7, 7' verfügt.

Wie in Fig. 2 dargestellt, ist auf der mit der Klebeschicht 4 verbundenen Seite der Innenscheibe 3 eine transparente, elektrisch heizbare Beschichtung 8 abgeschieden. Die heizbare Beschichtung 8 ist hier beispielsweise im Wesentlichen vollflächig auf die Innenscheibe 3 aufgebracht, wobei ein allseitig umlaufender Randstreifen 9 der Innenscheibe 3 nicht beschichtet ist, so dass ein Beschichtungsrand 10 der heizbaren Beschichtung 8 gegenüber dem Scheibenrand 5 nach innen rückversetzt ist. Hierdurch wird eine elektrische Isolierung der heizbaren Beschichtung 8 nach außen bewirkt. Zudem wird die heizbare Beschichtung 8 gegen vom Scheibenrand 5 vordringende Korrosion geschützt.

Die heizbare Beschichtung 8 umfasst in an sich bekannter Weise eine nicht näher dargestellte Schichtenfolge mit mindestens einer elektrisch heizbaren, metallischen Teilschicht, vorzugsweise Silber (Ag), und gegebenenfalls weiteren Teilschichten wie Entspiegelungs- und Blockerschichten. Vorteilhaft ist die Schichtenfolge thermisch hoch belastbar, so dass sie die zum Biegen von Glasscheiben erforderlichen Temperaturen von typischer Weise mehr als 600°C ohne Schädigung übersteht, wobei aber auch thermisch gering belastbare Schichtenfolgen vorgesehen sein können. Die heizbare Beschichtung 8 kann gleichermaßen als metallische Einzelschicht aufgebracht sein. Ebenso ist denkbar, die heizbare Beschichtung 8 nicht direkt auf die Innenscheibe 3 aufzubringen, sondern diese zunächst auf einen Träger, beispielsweise eine Kunststofffolie, aufzubringen, der anschließend mit der Außen- und Innenscheibe 2, 3 verklebt wird. Alternativ kann die Trägerfolie mit Klebefolien (z.B. PVB-Folien) verbunden und als Dreischichtenanordnung (Trilayer) mit Innen- und Außenscheibe 2, 3 verklebt werden. Die heizbare Beschichtung 8 wird vorzugsweise durch Sputtern bzw. Magnetron-Kathodenzerstäubung auf die Innen- oder Außenscheibe 2, 3 aufgebracht.

Wie in Fig. 1 dargestellt, ist die heizbare Beschichtung 8 angrenzend an die beiden ersten Seiten 6, 6', d.h. am oberen und unteren Scheibenrand 5, mit einer bandförmigen oberen Sammelelektrode 11 (Bus bar) und einer bandförmigen unteren Sammelelektrode 11' (in der Beschreibungseinleitung als "erste Elektroden" bezeichnet) elektrisch verbunden und zu diesem Zweck mit dem beiden Sammelelektroden 11, 11' beispielsweise galvanisch gekoppelt. Die obere Sammelelektrode 11 ist zur Verbindung mit dem einen Pol einer (nicht gezeigten) Spannungsquelle vorgesehen, während die untere Sammelelektrode 11' zur Verbindung mit dem anderen Pol der Spannungsquelle vorgesehen ist. Die beiden Sammelelektroden 11, 11' gegensätzlicher Polarität dienen für eine gleichmäßige Einleitung und Verteilung des Heizstroms in der heizbaren Beschichtung 8, wobei zwischen den beiden Sammelelektroden 11, 11' ein heizbarer Abschnitt bzw. Heizfeld 12 eingeschlossen ist. Die beiden ersten Elektroden 11, 11' sind beispielsweise auf die elektrisch heizbare Beschichtung 8 gedruckt. Die beiden Sammelelektroden 11, 11' haben jeweils einen zumindest annähernd geradlinigen Verlauf.

Die Windschutzscheibe 1 ist weiterhin mit einer beschichtungsfreien Zone 14 versehen, welche hier beispielsweise als Sensorfenster für einen Regensensor dient. Es versteht sich, dass die beschichtungsfreie Zone 14 auch für eine anderweitige Verwendung vorgesehen sein, beispielsweise als Kommunikationsfenster, zu welchem Zweck sie zumindest für einen Teil des elektromagnetischen Spektrums durchlässig ist, um einen reibungslosen Datenverkehr durch die Windschutzscheibe zu ermöglichen.

Die beschichtungsfreie Zone 14 hat hier beispielsweise eine zumindest annähernd rechteckige Kontur mit gerundeten Ecken und wird durch einen von der elektrisch heizbaren Beschichtung 8 gebildeten Zonenrand 18 begrenzt. Die beschichtungsfreie Zone 14 ist zumindest für einen Teil des elektromagnetischen Spektrums (z. B. IR-Wellen, Funkwellen im Ultrakurz-, Kurz- und Langwellenbereich) durchlässig, um einen reibungslosen Datenverkehr durch die Windschutzscheibe 1 zu ermöglichen. Die beschichtungsfreie Zone 14 kann beispielsweise durch vorheriges Maskieren beim Aufbringen der heizbaren Beschichtung 8 auf die Innenscheibe 3 hergestellt werden. Alternativ kann sie nach Aufbringen der heizbaren Beschichtung 8 auch durch chemischen oder mechanischen Abtrag beispielsweise mittels Ätzung oder Einsatz eines Reibrads hergestellt werden. Die beschichtungsfreie Zone 14 befindet sich innerhalb des Heizfelds 12 in der Nähe der oberen Sammelelektrode 11.

Wie in Fig. 1 gezeigt, ist in der Windschutzscheibe 1 eine Zusatzelektrode 15 (in der Beschreibungseinleitung als "zweite Elektrode" bezeichnet) vorgesehen, die hier beispielsweise mit der oberen Sammelelektrode 11 elektrisch (galvanisch) verbunden ist. Die Zusatzelektrode 15 kann zumindest gedanklich in verschiedene Abschnitte unterteilt werden. So umfasst die Zusatzelektrode 15 einen mit der oberen Sammelelektrode 11 elektrisch verbundenen Zuleitungsabschnitt 16, der hier beispielsweise anfangs in einem Beschichtungsteil 25 einen mäanderförmig geschwungenen Verlauf hat und anschließend in einen umlaufenden, zumindest annähernd ringförmigen Zonenteil 17 übergeht. Während sich der Beschichtungsteil 25 vollständig im Bereich der heizbaren Beschichtung 8 befindet, ist der Zonenteil 17 vollständig innerhalb der beschichtungsfreien Zone 14 angeordnet. Der Zonenteil 17 ist hier beispielsweise zumindest annähernd in Passform zur Kontur des Zonenrands 18 ausgebildet. Innerhalb des Zonenteils 17 des Zuleitungsabschnitts 16 ist somit eine vom Zonenteil 17 umgrenzte Freifläche bzw. Elektrodenfenster 26 gebildet, so dass die Funktion der beschichtungsfreien Zone 14 durch die Zusatzelektrode 15 nicht beeinträchtigt ist.

Der die beschichtungsfreie Zone 14 begrenzende Zonenrand 18 setzt sich aus zwei einander gegenüberliegenden, zumindest annähernd geraden ersten Randabschnitten 19, 19', die parallel zu den ersten Seiten 6, 6' der Windschutzscheibe 1 liegen, und zwei einander gegenüberliegenden, zumindest annähernd geraden zweiten Randabschnitten 20, 20', die parallel zu den zweiten Seiten 7, 7' der Windschutzscheibe 1 liegen, zusammen. Insbesondere ist ein oberer erster Randabschnitt 19 näher zur oberen Sammelelektrode 11 als zur unteren Sammelelektrode 11' angeordnet, während ein unterer erster Randabschnitt 19' näher zur unteren Sammelelektrode 11' als zur oberen Sammelelektrode 11 angeordnet ist. Insbesondere verläuft der untere erste Randabschnitt 19' parallel zur unteren Sammelelektrode 11', welche zur Verbindung mit dem anderen Pol der Spannungsquelle vorgesehen ist.

Die Zusatzelektrode 15 verfügt weiterhin über eine Mehrzahl geradlinig verlaufender Anschlussabschnitte 21, welche jeweils als Vorsprung des ringförmigen Zonenteils 17 des Zuleitungsabschnitts 16 ausgebildet sind. Die Anschlussabschnitte 21 sind hier (nur) im Bereich des unteren ersten Randabschnitts 19' verteilt angeordnet. Dabei sind die Anschlussabschnitte 21 in einer gleichmäßigen Abfolge (gleiche Zwischenabstände) reihen- bzw. kammförmig nebeneinander liegend angeordnet, springen jeweils senkrecht zum unteren ersten Randabschnitt 19' zur unteren Sammelelektrode 11' hin vor und erstrecken sich jeweils bis auf die heizbare Beschichtung 8, so dass sie mit dieser elektrisch (galvanisch) verbunden sind. Die Anschlussabschnitte 21 erstrecken sich somit über den unteren ersten Randabschnitt 19' hinweg. An den beiden Enden der Reihe sind die Anschlussabschnitte 21 zu den zweiten Seiten 7 der Windschutzscheibe 1 hin leicht angestellt, wobei sie in etwa zum linken unteren Eckbereich 22 bzw. rechten unteren Eckbereich 22' der Windschutzscheibe 1 gerichtet sind. Die Anschlussabschnitte 21 sind über die komplette Länge des unteren ersten Randabschnitts 19' gleichmäßig verteilt angeordnet und ermöglichen somit ein gleichmäßiges Einleiten und (breites) Verteilen des Heizstroms im unteren Bereich der heizbeschichtungsfreien Zone 14 in die heizbare Beschichtung 8.

Die beiden bandförmigen Sammelelektroden 11, 11' sind hier beispielsweise durch Aufdrucken beispielsweise mittels Siebdruckverfahren einer metallischen Druckpaste, beispielsweise Silberdruckpaste, auf die heizbare Beschichtung 8 hergestellt. Die Zusatzelektrode 15 kann gleichermaßen als bandförmige Elektrode durch Aufdrucken auf die heizbare Beschichtung 8 und die beschichtungsfreie Zone 14 hergestellt werden, wobei die beiden Sammelelektroden 11, 11' und die Zusatzelektrode 15 hier beispielsweise in einem gemeinsamen (selben) Verfahrens- bzw. Druckschritt hergestellt sind. Alternativ wäre es auch möglich, die Sammelelektroden 11, 11' und/oder die Zusatzelektrode 15 durch Aufbringen vorgefertigter Metallstreifen aus beispielsweise Kupfer oder Aluminium, die dann beispielsweise durch Verlöten mit der heizbaren Beschichtung 8 elektrisch verbunden werden, herzustellen.

Die beiden Sammelelektroden 11, 11' und die Zusatzelektrode 15 haben hier beispielsweise einen elektrischen Widerstand, der im Bereich von 0,15 bis 4 Ohm/Meter (Ω/m) liegt. Der spezifische Widerstand liegt insbesondere für im Druckverfahren hergestellte Sammelelektroden 11, 11' beispielsweise im Bereich von 2 bis 4 µOhm·cm. Die Breite der beiden bandförmigen Sammelelektroden 11, 11' beträgt beispielsweise 10 bis 15 mm. Die Breite der bandförmigen Zusatzelektrode 15 ist beispielsweise geringer als 10 mm und beträgt beispielsweise 1 bis 10 mm. Die Breite der beiden Sammelelektroden 11, 11' und der Zusatzelektrode 15 ist beispielsweise so bemessen, dass diese jeweils maximal 10 W/m, vorzugsweise maximal 8 W/m, beispielsweise 5 W/m, als Verlustleistung abgeben. Die Dicke der beiden Sammelelektroden 11, 11' und der Zusatzelektrode 15 liegt beispielsweise jeweils im Bereich von 5 bis 25 µm, insbesondere im Bereich von 10 bis 15 µm. Eine Querschnittsfläche der beiden Sammelelektroden 11, 11' und der Zusatzelektrode 15 liegt beispielsweise jeweils im Bereich von 0,01 bis 1 mm², insbesondere im Bereich von 0,1 bis 0,5 mm².

Für beispielsweise aus Kupfer (Cu) bestehende, vorgefertigte bandförmige Sammelelektroden 11, 11' und entsprechend ausgebildete Zusatzelektrode 15 liegt die Dicke beispielsweise im Bereich von 30 bis 150 µm, insbesondere im Bereich von 50 bis 100 µm. Hierbei liegt die Querschnittsfläche beispielsweise im Bereich von 0,05 bis 0,25 mm².

Vorzugsweise hat die Zusatzelektrode 15 in der Windschutzscheibe 1 einen solchen elektrischen Widerstand, dass beim Anlegen der Speisespannung der durch das Heizfeld 12 fließende Heizstrom eine zumindest annähernd homogene Stromdichteverteilung aufweist. Dabei kann der elektrische Widerstand der Zusatzelektrode 15 in einfacher Weise durch die Länge des Zuleitungsabschnitts 16, insbesondere des Beschichtungsteils 25, auf einen wahlfrei vorbestimmbaren bzw. vorbestimmten Widerstandswert eingestellt werden, zu welchem Zweck der Zuleitungsabschnitt 16 hier beispielsweise einen mäanderförmigen Verlauf hat, wobei aber gleichermaßen ein andersartiger Verlauf realisiert sein kann.

Der elektrische Flächenwiderstand der heizbaren Beschichtung 8 ist beispielsweise so gewählt, dass der durch das Heizfeld 12 fließende Strom eine Größe von maximal 5A hat. Beispielsweise liegt der elektrische Flächenwiderstand der heizbaren Beschichtung 8 im Bereich von 0,1 bis 4 Ω/□ und beträgt beispielsweise 1 Ω/□.

Die der Innenscheibe 3 zugewandte Oberfläche der Außenscheibe 2 ist mit einer opaken Farbschicht versehen, die einen am Scheibenrand 5 rahmenförmig umlaufenden Maskierungsstreifen 13 bildet. In Fig. 1 ist lediglich der Maskierungsstreifen 13 im Bereich der beiden ersten Seiten 6, 6' der Windschutzscheibe 1 dargestellt. Der Maskierungsstreifen 13 besteht beispielsweise aus einem elektrisch isolierenden, schwarz eingefärbten Material, das in die Außenscheibe 2 eingebrannt ist. Der Maskierungsstreifen 13 verhindert einerseits die Sicht auf einen Klebestrang (nicht gezeigt), mit dem die Windschutzscheibe 1 in die Fahrzeugkarosserie eingeklebt wird, andererseits dient er als UV-Schutz für das verwendete Klebematerial. Weiterhin bestimmt der Maskierungsstreifen 13 das Sichtfeld der Windschutzscheibe 1. Eine weitere Funktion des Maskierungsstreifens 13 ist eine Kaschierung der beiden Sammelelektroden 11, 11', so dass diese von außen nicht erkennbar sind. Am oberen Scheibenrand 5 verfügt der Maskierungsstreifen 13 weiterhin über einen Deckabschnitt 23, durch den die beschichtungsfreie Zone 14 kaschiert wird.

In der Windschutzscheibe 1 mit heizbarer Beschichtung 8 kann somit durch Anlegen einer Speisespannung an die beiden Sammelelektroden 11, 11' ein Heizstrom im Heizfeld 12 generiert werden. Durch Anlegen der Speisespannung wird gleichzeitig eine Potenzialdifferenz zwischen der Zusatzelektrode 15 und der unteren Sammelelektrode 11' erzeugt, so dass ein Teil des Heizstroms durch einen Heizfeldabschnitt 24 fließt, der zwischen der Zusatzelektrode 15 bzw. der beschichtungsfreien Zone 14 und der unteren Sammelelektrode 11' eingeschlossen ist. Im Bereich der beschichtungsfreien Zone 14 wird der Heizstrom über den unteren ersten Randabschnitt 19', welcher zu der mit dem anderen Pol der Spannungsquelle zu verbindenden Sammelelektrode 11' unmittelbar benachbart ist, gleichmäßig verteilt in die heizbare Beschichtung 8 eingeleitet. Der elektrische (Innen-)widerstand der Zusatzelektrode 15 erzeugt bei der angelegten Speisespannung eine solche Potenzialdifferenz zwischen der Zusatzelektrode 15 und der unteren Sammelelektrode 11', dass die Stromdichteverteilung des Heizstroms in der kompletten heizbaren Beschichtung 8 zumindest annähernd homogen ist. Dies ermöglicht in vorteilhafter Weise eine Homogenisierung der Heizleistungsverteilung in der heizbaren Beschichtung 8.

In Fig. 2A ist eine Variante der Windschutzscheibe von Fig. 1 veranschaulicht, wobei als Variante der Zonenteil 17 nicht umlaufend geschlossen ist, sondern lediglich im Bereich des einen (hier rechten) zweiten Randabschnitts 20' und unteren ersten Randabschnitts 19' ausgebildet ist. In der Praxis hat sich gezeigt, dass in dem auf der heizbaren Beschichtung 8 befindlichen, mäanderförmig geschwungenen Beschichtungsteil 25 des Zuleitungsabschnitts 16 bei bestimmten Bedingungen die Möglichkeit besteht, dass insbesondere in dem mit "A" gekennzeichneten Bereich eine höhere Temperatur als im Heizfeld 12 vorliegt. Dies kann insbesondere im Hinblick auf Kundenanforderungen unerwünscht sein.

Eine Maßnahme zur Vermeidung einer solchen lokalen Überhitzung ist in Fig. 2B veranschaulicht. Demnach ist der Zuleitungsabschnitt 16 der Zusatzelektrode 15' unterbrochen und in zwei räumlich (strukturell) voneinander getrennte, d.h. nicht durch dasselbe Elektrodenmaterial miteinander verbundene Bereiche unterteilt. So umfasst der Zuleitungsabschnitt 16 einen ersten Zuleitungsteil 30 und einen hiervon getrennten zweiten Zuleitungsteil 31. Der erste Zuleitungsteil 30 ist an die zur Verbindung mit dem einen Pol der Spannungsquelle vorgesehene (obere) erste Sammelelektrode 11 angeschlossen. Der zweite Zuleitungsteil 31 umfasst den Zonenteil 17, von dem die Anschlussabschnitte 21 vorspringen. Zudem enthält der erste Zuleitungsteil 30 einen ersten Kopplungsabschnitt 32, der zweite Zuleitungsteil 30 einen zweiten Kopplungsabschnitt 33, die jeweils mit der elektrisch leitfähigen heizbaren Beschichtung 8 elektrisch verbunden sind, beispielsweise durch Aufdrucken auf die Beschichtung 8. Jeder der beiden Kopplungsabschnitte 32, 33 hat einen zumindest annähernd geradlinigen Verlauf, wobei die beiden Kopplungsabschnitte 32, 33 in einer Kopplungszone 34 in paralleler Ausrichtung, unmittelbar aneinander angrenzend, nebeneinander her verlaufen. Ein Zwischenabstand B zwischen den beiden Kopplungsabschnitten 32, 33 in der Kopplungszone 34 ist so gewählt, dass die beiden Kopplungsabschnitte 32, 33 durch die elektrisch heizbare Beschichtung 8 galvanisch verbunden (gekoppelt) sind. Wird die zur Verbindung mit dem einen Pol der Spannungsquelle vorgesehene (obere) Sammelelektrode 11 mit einer Heizspannung beaufschlagt, so kann der Heizstrom zwischen den beiden Kopplungsabschnitten 32, 33 durch die zwischen den beiden Kopplungsabschnitten 32, 33 befindliche heizbare Beschichtung 8 übertragen werden. Die Beschichtung 8 formt somit zwischen den beiden Kopplungsabschnitten 32, 33 eine Stromtransferzone 35 zum Stromtransfer zwischen den beiden Kopplungsabschnitten 32, 33. Ein Zwischenabstand B der beiden Kopplungsabschnitte 32, 33 ist vorzugsweise so gewählt, dass der Strom praktisch ohne Verlust an Ladungsträgern zwischen den beiden Kopplungsabschnitten 32, 33 transferiert werden kann. Der Zwischenabstand B liegt hier beispielsweise im einstelligen Zentimeterbereich oder darunter.

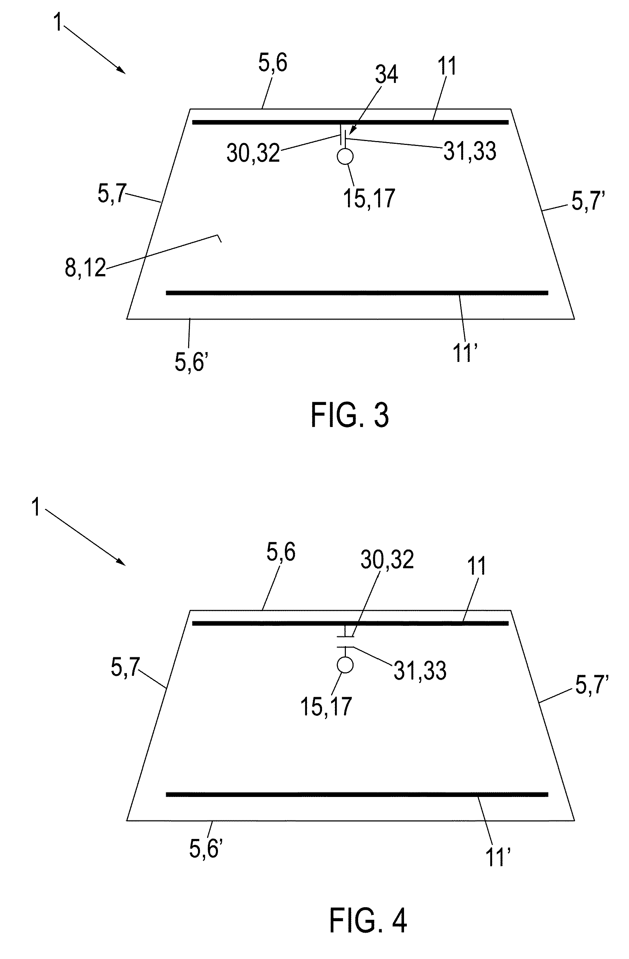

In Fig. 3 ist anhand einer schematischen Darstellung die unterteilte Zusatzelektrode 15' von Fig. 2B im eingebauten Zustand veranschaulicht, wobei die Windschutzscheibe 1 mit Ausnahme der unterteilten Zusatzelektrode 15' baugleich zu der in den Figuren 1 und 2 veranschaulichten Windschutzscheibe 1 ist. Um unnötige Wiederholungen zu vermeiden, wird diesbezüglich auf die dort gemachten Ausführungen verwiesen. Im Unterschied zu Fig. 2B umfasst die Zusatzelektrode 15' einen ringförmig geschlossenen Zonenteil 17 im Zuleitungsabschnitt 16. Die Anschlussabschnitte 21 sind zum Zwecke einer einfacheren Darstellung nicht gezeigt. Die beiden geradlinigen Kopplungsabschnitte 32, 33 sind so angeordnet, dass sie einen zueinander zumindest annähernd parallelen, zu den beiden geradlinigen Sammelelektroden 11, 11' senkrechten Verlauf haben.

Fig. 4 zeigt eine Variante von Fig. 3, wobei lediglich die beiden Kopplungsabschnitte 32, 33 in Gegenüberstellung angeordnet sind und sich dabei zueinander parallel sowie parallel zu den beiden geradlinigen Sammelelektroden 11, 11' erstrecken.

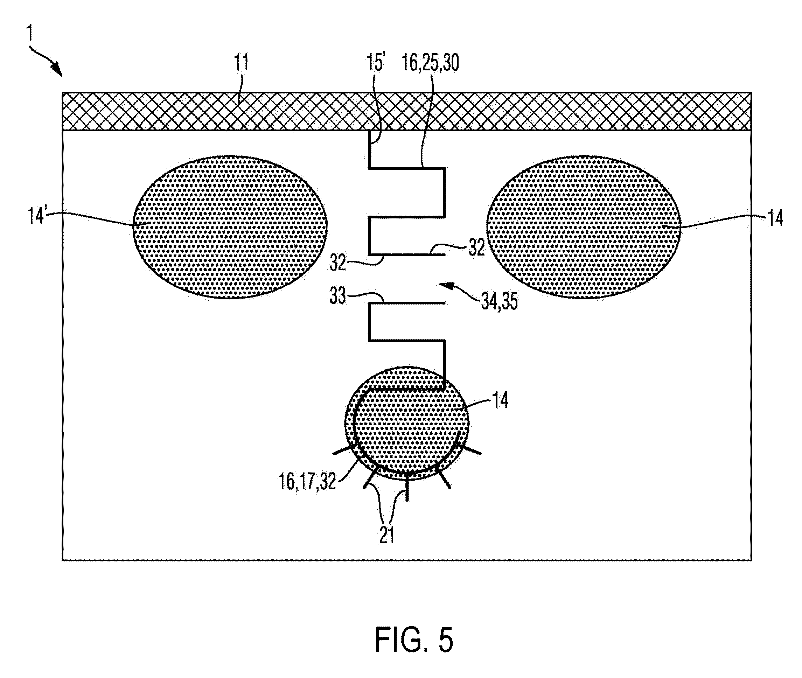

In der in Fig. 5 veranschaulichten Variante ist der Zuleitungsabschnitt 16 der Zusatzelektrode 15' unterbrochen und in zwei räumlich (strukturell) voneinander getrennte, d.h. nicht durch dasselbe Elektrodenmaterial miteinander verbundene Bereiche unterteilt ist. Der Zuleitungsabschnitt 16 umfasst einen ersten Zuleitungsteil 30 und einen hiervon getrennten zweiten Zuleitungsteil 31. Der erste Zuleitungsteil 30 ist an die zur Verbindung mit dem einen Pol der Spannungsquelle vorgesehene (obere) erste Sammelelektrode 11 angeschlossen. Der zweite Zuleitungsteil 31 umfasst den Zonenteil 17, von dem die Anschlussabschnitte 21 vorspringen. Der erste Zuleitungsteil 30 umfasst einen ersten Kopplungsabschnitt 32, der zweite Zuleitungsteil 30 einen zweiten Kopplungsabschnitt 33, die jeweils mit der elektrisch leitfähigen heizbaren Beschichtung 8 elektrisch verbunden sind. Jeder der beiden Kopplungsabschnitte 32, 33 hat einen zumindest annähernd geradlinigen Verlauf, wobei die beiden Kopplungsabschnitte 32, 33 in einer Kopplungszone 34 in paralleler Ausrichtung, unmittelbar aneinander angrenzend, nebeneinander her verlaufen. Hierbei sind die beiden Kopplungsabschnitten 32, 33 in der Kopplungszone 34 durch die elektrisch heizbare Beschichtung 8 galvanisch verbunden (gekoppelt). Die Beschichtung 8 formt somit zwischen den beiden Kopplungsabschnitten 32, 33 eine Stromtransferzone 35 zum Stromtransfer zwischen den beiden Kopplungsabschnitten 32, 33. Die beiden Kopplungsabschnitte 32, 33 sind in Gegenüberstellung angeordnet und erstrecken sich parallel zu den beiden geradlinigen Sammelelektroden 11, 11'.

### Bezugszeichenliste

1 Windschutzscheibe
2 Außenscheibe
3 Innenscheibe
4 Klebeschicht
5 Scheibenrand
6, 6' erste Seite
7, 7' zweite Seite
8 Beschichtung
9 Randstreifen
10 Beschichtungsrand
11, 11' Sammelelektrode
12 Heizfeld
13 Maskierungsstreifen
14 beschichtungsfreie Zone
15 Zusatzelektrode
16 Zuleitungsabschnitt
17 Zonenteil
18 Zonenrand
19, 19' erster gerader Randabschnitt
20, 20' zweiter gerader Randabschnitt
21 Anschlussabschnitt
22, 22' Eckbereich
23 Deckabschnitt
24 Heizfeldabschnitt
25 Beschichtungsteil
26 Elektrodenfenster
30 erster Zuleitungsteil
31 zweiter Zuleitungsteil
32 erster Kopplungsabschnitt
33 zweiter Kopplungsabschnitt
34 Kopplungszone
35 Stromtransferzone

## Patentansprüche

1. Transparente Scheibe (1) mit einer elektrisch heizbaren Beschichtung (8), die mit mindestens zwei zum elektrischen Verbinden mit den beiden Polen einer Spannungsquelle vorgesehenen ersten Elektroden (11, 11') elektrisch so verbunden ist, dass durch Anlegen einer Speisespannung ein Heizstrom über ein zwischen den beiden ersten Elektroden (11, 11') gebildetes Heizfeld (12) fließt, wobei das Heizfeld (12) zumindest eine beschichtungsfreie Zone (14) enthält, welche von einem zumindest abschnittsweise von der heizbaren Beschichtung (8) gebildeten Zonenrand (18) begrenzt wird, **gekennzeichnet durch** zumindest eine zum elektrischen Verbinden mit dem einen Pol der Spannungsquelle vorgesehene zweite Elektrode (15), welche über wenigstens einen zumindest abschnittsweise in der beschichtungsfreien Zone (14) angeordneten Zuleitungsabschnitt (16) und einen oder mehrere mit dem Zuleitungsabschnitt (16) verbundene Anschlussabschnitte (21) verfügt, wobei sich die Anschlussabschnitte (21) jeweils ausgehend von der beschichtungsfreien Zone (14) über einen Randabschnitt (19') des Zonenrands (18) hinweg erstrecken, wobei der Randabschnitt (19') von einem Abschnitt (24) der heizbaren Beschichtung (8) gebildet wird, der sich zwischen der beschichtungsfreien Zone (14) und der zur Verbindung mit dem anderen Pol der Spannungsquelle vorgesehenen ersten Elektrode (11') befindet, wobei der Zuleitungsabschnitt (16) unterbrochen ist und aus zumindest zwei voneinander getrennten Zuleitungsteilen (30, 31) besteht, welche jeweils einen Kopplungsabschnitt (32, 33) aufweisen, der mit der heizbaren Beschichtung (8) elektrisch verbunden ist, wobei die beiden Kopplungsabschnitte (32, 33) so angeordnet sind, dass sie **durch** die heizbare Beschichtung (8) galvanisch gekoppelt sind.

2. Transparente Scheibe (1) nach Anspruch 1, bei welcher die beiden Kopplungsabschnitte (32, 33) einen zumindest annähernd parallelen Verlauf haben.

3. Transparente Scheibe (1) nach einem der Ansprüche 1 oder 2, bei welcher ein erster Kopplungsabschnitt (32) mit der zur Verbindung mit dem einen Pol der Spannungsquelle vorgesehenen ersten Elektrode (11) und ein zweiter Kopplungsabschnitt (33) mit dem einen oder mehreren Anschlussabschnitten (21) verbunden ist.

4. Transparente Scheibe (1) nach einem der Ansprüche 1 bis 3, bei welcher die Anschlussabschnitte (21) jeweils frei endend ausgebildet sind.

5. Transparente Scheibe (1) nach einem der Ansprüche 1 bis 4, bei welcher die Anschlussabschnitte (21) über den Randabschnitt (19') der beschichtungsfreien Zone (14) gleichmäßig verteilt angeordnet, insbesondere kammartig, ausgebildet sind.

6. Transparente Scheibe (1) nach einem der Ansprüche 1 bis 5, bei welcher sich der Zuleitungsabschnitt (16) aus einem außerhalb der beschichtungsfreien Zone (14) angeordneten Beschichtungsteil (25) und einem innerhalb der beschichtungsfreien Zone (14) angeordneten Zonenteil (17) zusammensetzt.

7. Transparente Scheibe (1) nach einem der Ansprüche 1 bis 6, bei welcher der Zuleitungsabschnitt (16) vollständig innerhalb der beschichtungsfreien Zone (14) angeordnet ist.

8. Transparente Scheibe (1) nach einem der Ansprüche 1 bis 7, bei welcher der Zuleitungsabschnitt (16) zumindest dem Randabschnitt (19') des Zonenrands (18), über welchen sich die Anschlussabschnitte (21) hinweg erstrecken, folgt.

9. Transparente Scheibe (1) nach einem der Ansprüche 1 bis 8, bei welcher der Zuleitungsabschnitt (16) dem Zonenrand (18) umlaufend folgt.

10. Transparente Scheibe (1) nach einem der Ansprüche 1 bis 9, bei welcher der Zuleitungsabschnitt (16) über die beschichtungsfreie Zone (14) verteilt angeordnet ist.

11. Transparente Scheibe (1) nach einem der Ansprüche 1 bis 9, bei welcher die zweite Elektrode (15) zumindest zwei Zuleitungsabschnitte (16) aufweist, die jeweils mit einem oder mehreren Anschlussabschnitten (21) verbunden sind.

12. Transparente Scheibe (1) nach einem der Ansprüche 1 bis 11, bei welcher die Länge des Zuleitungsabschnitts (16), beispielsweise durch einen mäanderartig geschwungenen Verlauf, so bemessen ist, dass die zweite Elektrode (15) einen vorbestimmbaren elektrischen Widerstand hat, welcher insbesondere zum Flächenwiderstand der heizbaren Beschichtung (8) in einem Flächenbereich, welcher der beschichtungsfreien Zone (14) entspricht, äquivalent ist.

13. Verfahren zur Herstellung einer transparenten Scheibe (1) nach einem der vorhergehenden Ansprüche 1 bis 11, mit den folgenden Schritten:
Herstellen einer elektrisch heizbaren Beschichtung (8), Ausbilden von mindestens zwei zum elektrischen Verbinden mit den beiden Polen einer Spannungsquelle vorgesehenen ersten Elektroden (11, 11'), welche mit der heizbaren Beschichtung (8) elektrisch so verbunden sind, dass durch Anlegen einer Speisespannung ein Heizstrom über ein zwischen den beiden ersten Elektroden (11, 11') befindliches Heizfeld (12) fließt,
Herstellen zumindest einer beschichtungsfreien Zone (14) im Heizfeld (12),
Herstellen zumindest einer zum elektrischen Verbinden mit dem einen Pol der Spannungsquelle vorgesehenen zweiten Elektrode (15), die über wenigstens einen zumindest abschnittsweise in der beschichtungsfreien Zone (14) angeordneten Zuleitungsabschnitt (16) und einen oder mehrere mit dem Zuleitungsabschnitt (16) verbundene Anschlussabschnitte (21) verfügt, wobei sich die Anschlussabschnitte (21) jeweils ausgehend von der beschichtungsfreien Zone (14) über einen Randabschnitt (19') des Zonenrands (18) hinweg erstrecken, wobei der Randabschnitt (19') von einem Abschnitt (24) der heizbaren Beschichtung (8) gebildet wird, der sich zwischen der beschichtungsfreien Zone (14) und der zur Verbindung mit dem anderen Pol der Spannungsquelle vorgesehenen ersten Elektrode (11') befindet, wobei der Zuleitungsabschnitt (16) unterbrochen ist und aus zumindest zwei voneinander getrennten Zuleitungsteilen (30, 31) gebildet wird, welche jeweils einen mit der heizbaren Beschichtung (8) elektrisch verbundenen Kopplungsabschnitt (32, 33) aufweisen, wobei die beiden Kopplungsabschnitte (30) so angeordnet werden, dass sie durch die heizbare Beschichtung (8) galvanisch gekoppelt sind.

14. Verfahren nach Anspruch 13, bei welchem die Elektroden (11, 11', 15) im Druckverfahren, insbesondere Siebdruckverfahren, herstellt werden.

## Claims

1. Transparent pane (1) having an electrically heatable coating (8), which is electrically connected to at least two first electrodes (11, 11') provided for electrical connection to the two terminals of a voltage source such that by applying a feed voltage, a heating current flows over a heating field (12) formed between the two first electrodes (11, 11'), wherein the heating field (12) includes at least one coating-free zone (14), which is bounded by a zone edge (18) formed at least in sections by the heatable coating (8), **characterized by** at least one second electrode (15) provided for electrical connection to one terminal of the voltage source, which electrode has at least one supply section (16) disposed at least in sections in the coating-free zone (14) and one or a plurality of connection sections (21) connected to the supply section (16), wherein the connection sections (21) extend, respectively, starting from the coating-free zone (14), beyond an edge section (19') of the zone edge (18), wherein the edge section (19') is formed by a section (24) of the heatable coating (8) that is situated between the coating-free zone (14) and the first electrode (11') provided for connection to the other terminal of the voltage source, wherein the supply section (16) is interrupted and consists of at least two supply parts (30, 31) separated from each other, which have, respectively, a coupling section (32, 33), which is electrically connected to the heatable coating (8), wherein the two coupling sections (32, 33) are disposed such that they are galvanically coupled by the heatable coating (8).

2. Transparent pane (1) according to claim 1, wherein the two coupling sections (32, 33) have an at least approximately parallel course.

3. Transparent pane (1) according to one of claims 1 or 2, wherein a first coupling section (32) is connected to the first electrode (11) provided for connection to one terminal of the voltage source and a second coupling section (33) is connected to one or a plurality of connection sections (21).

4. Transparent pane (1) according to one of claims 1 through 3, wherein the connection sections (21) respectively are implemented with a free end.

5. Transparent pane (1) according to one of claims 1 through 4, wherein the connection sections (21) are implemented evenly distributed disposed over the edge section (19') of the coating-free zone (14), in particular like a comb.

6. Transparent pane (1) according to one of claims 1 through 5, wherein the supply section (16) is composed of a coating portion (25) disposed outside the coating-free zone (14) and a zone portion (17) disposed within the coating-free zone (14).

7. Transparent pane (1) according to one of claims 1 through 6, wherein the supply section (16) is disposed completely within the coating-free zone (14).

8. Transparent pane (1) according to one of claims 1 through 7, wherein the supply section (16) follows at least the edge section (19') of the zone edge (18), beyond which the connection sections (21) extend.

9. Transparent pane (1) according to one of claims 1 through 8, wherein the supply section (16) circumferentially follows the zone edge (18).

10. Transparent pane (1) according to one of claims 1 through 9, wherein the supply section (16) is distributed disposed over the coating-free zone (14).

11. Transparent pane (1) according to one of claims 1 through 9, wherein the second electrode (15) has at least two supply sections (16), which respectively are connected to one or a plurality of connection sections (21).

12. Transparent pane (1) according to one of claims 1 through 11, wherein the length of the supply section (16) is dimensioned, for example, by a meanderingly curved course, such that the second electrode (15) has a predefinable electrical resistance, which is equivalent, in particular, to the sheet resistance of the heatable coating (8) in a surface area that corresponds to the coating-free zone (14).

13. Method for producing a transparent pane (1) according to one of the preceding claims 1 to 11, comprising the following steps:
producing an electrically heatable coating (8), forming at least two first electrodes (11, 11') provided for electrical connection to the two terminals of a voltage source, which electrodes are electrically connected to the heatable coating (8) such that by applying a feed voltage, a heating current flows over a heating field (12) situated between the two first electrodes (11, 11'),
producing at least one coating-free zone (14) in the heating field (12),
producing at least one second electrode (15) provided for electrical connection to one terminal of the voltage source, which electrode has at least one supply section (16) disposed at least in sections in the coating-free zone (14) and one or a plurality of connection sections (21) connected to the supply section (16), wherein the connection sections (21) extend, respectively, starting from the coating-free zone (14), beyond an edge section (19') of the zone edge (18), wherein the edge section (19') is formed by a section (24) of the heatable coating (8), which is situated between the coating-free zone (14) and the first electrode (11') provided for connection to the other terminal of the voltage source, wherein the supply section (16) is interrupted and is formed from at least two supply parts (30, 31) separated from each other, which have, respectively, a coupling section (32, 33) electrically connected to the heatable coating (8), wherein the two coupling sections (32, 33) are disposed such that they are galvanically coupled by the heatable coating (8).

14. Method according to claim 13, wherein the electrodes (11, 11', 15) are produced in the printing method, in particular, the screen printing method.

## Revendications

1. Vitre transparente (1) avec un revêtement pouvant être chauffé électriquement (8), qui est raccordée avec au moins deux premières électrodes (11, 11') prévues pour le raccordement électrique avec les deux pôles de telle manière, que par l'application d'une tension d'alimentation un courant de chauffage passe par un circuit de chauffage (12) formé entre lesdites deux premières électrodes (11, 11'), où la zone de chauffage (12) contient au moins une zone dépourvue de revêtement (14), qui est limitée au moins dans certaines sections par une bordure de zone (18) formée par le revêtement pouvant être chauffé (8), **caractérisée par** au moins une deuxième électrode (15) prévue pour être raccordée électriquement à l'un des pôles de la source de tension, qui dispose d'au moins une section de conducteurs (16) disposée au moins partiellement dans la zone dépourvue de revêtement et une ou plusieurs sections de raccordement (21) associées à la section de conducteurs (16), où les sections de raccordement (21) s'étendent à partir de la zone dépourvue de revêtement (14) respectivement le long d'une section de bordure (19') de la bordure de zone (18), où la section de bordure (19') est formée par une section (24) du revêtement pouvant être chauffé (8), se trouvant entre la zone dépourvue de revêtement (14) et ladite première électrode (11') prévue pour être raccordée électriquement à l'autre pôle de la source de tension pour la connexion à l'autre pôle de la source de tension, où la section de conducteurs (16) est interrompue et est formée par au moins deux parties conductrices séparées (30, 31) présentant chacune une section d'accouplement (32, 33), qui est raccordée électriquement avec le revêtement pouvant être chauffé (8), où les deux sections d'accouplement (32, 33), sont disposées de telle manière qu'ils sont reliés galvaniquement par le revêtement pouvant être chauffé (8).

2. Vitre transparente (1) selon la revendication 1, où le cours des deux sections d'accouplement (32, 33) est au moins approximativement parallèle.

3. Vitre transparente (1) selon l'une des revendications 1 ou 2, où une première section d'accouplement (32) est reliée avec la première électrode (11) prévue pour être raccordée électriquement à la source de tension et une deuxième section d'accouplement (33) avec lesdites une ou plusieurs sections de raccordement (21).

4. Vitre transparente (1) selon l'une des revendications 1 à 3, où les sections de raccordement (21) sont formées respectivement avec des extrémités libres.

5. Vitre transparente (1) selon l'une des revendications 1 à 4, où les sections de raccordement (21) sont formées disposées uniformément le long de la section de bordure (19') de la zone dépourvue de revêtement (14), en particulier à la façon d'un peigne,

6. Vitre transparente (1) selon l'une des revendications 1 à 5, où la section de conducteurs (16) est composée d'une partie de revêtement (25) disposée à l'extérieur de la zone dépourvue de revêtement (14) et une partie de zone (17) disposée à l'intérieur de la zone dépourvue de revêtement (14).

7. Vitre transparente (1) selon l'une des revendications 1 à 6, où la section de conducteurs (16) est entièrement disposée au sein de la zone dépourvue de revêtement (14).

8. Vitre transparente (1) selon l'une des revendications 1 à 7, où la section de conducteurs (16) suit au moins la section de bordure (19') de la bordure de zone (18), sur laquelle s'étendent les sections de raccordement (21).

9. Vitre transparente (1) selon l'une des revendications 1 à 8, où la section de conducteurs (16) suit la périphérie de la bordure de zone (18).

10. Vitre transparente (1) selon l'une des revendications 1 à 9, où la section de conducteurs (16) est disposée répartie sur la zone dépourvue de revêtement (14).

11. Vitre transparente (1), selon l'une des revendications 1 à 9, où la deuxième électrode (15) présente au moins deux sections de conducteurs (16), qui sont respectivement associées à une ou plusieurs sections de raccordement (21).

12. Vitre transparente (1) selon l'une des revendications 1 à 11, où la longueur de la section de conducteurs (16), est mesurée, par exemple par son cours non-rectiligne en forme de méandre, afin que la deuxième électrode (15) ait une résistance électrique prédéterminable, équivalente en particulier à la résistance de surface du revêtement pouvant être chauffé (8) dans une zone de la surface qui correspond à la zone dépourvue de revêtement (14).

13. Procédé pour la fabrication d'une vitre transparente (1) selon l'une des revendications précédentes 1 à 11, avec les étapes suivantes :
fabrication d'un revêtement pouvant être chauffé électriquement (8), formation d'au moins deux premières électrodes (11, 11') prévues pour le raccordement électrique avec les deux pôles d'une source de tension, qui sont connectées électriquement avec le revêtement pouvant être chauffé (8) de telle manière, que par l'application d'une tension, un courant de chauffage passe par un circuit de chauffage (12) formé entre lesdites deux premières électrodes (11, 11'),
fabrication d'au moins une zone dépourvue de revêtement (14) dans le champ du chauffage (12),
fabrication d'au moins une deuxième électrode (15) prévue pour le raccordement électrique avec l'un des pôles de la source de tension, qui dispose d'au moins une section de conducteurs (16), disposée au moins partiellement dans la zone dépourvue de revêtement (14) et d'une ou plusieurs sections de raccordement (21) associées à la section de conducteurs (16), où les sections de raccordement (21) s'étendent à partir de la zone dépourvue de revêtement (14) respectivement le long d'une section de bordure (19') de la bordure de zone (18), où la section de bordure (19')
est formée par une section (24) du revêtement pouvant être chauffé (8), se trouvant entre la zone dépourvue de revêtement (14) et ladite première électrode (11') prévue pour être raccordée électriquement à l'autre pôle de la source de tension pour la connexion à l'autre pôle de la source de tension, où la section de conducteurs (16) est interrompue et est formée par au moins deux parties conductrices séparées (30, 31) présentant chacune une section d'accouplement (32, 33), où les deux sections d'accouplement (30) sont disposées de telle manière qu'elles sont reliées galvaniquement par le revêtement pouvant être chauffé (8).

14. Procédé selon la revendication 13, où les électrodes (11, 11', 15) sont fabriquées par un procédé d'impression, en particulier un procédé sérigraphique.
